# EUROPÄISCHE PATENTSCHRIFT

(11) **EP 1 820 674 B1**
(45) Veröffentlichungstag und Bekanntmachung des Hinweises auf die Patenterteilung: **20.01.2010**
(21) Anmeldenummer: 06023886.2
(22) Anmeldetag: 17.11.2006
(51) Int. Cl.: B60G 17/027, B60G 15/06

(54) **Einstellbares Federbein für Kraftfahrzeuge**
Adjustable suspension strut for a vehicle
Jambe de suspension réglable pour véhicules

(30) Priorität: 15.02.2006 DE 102006006871
(43) Veröffentlichungstag der Anmeldung: 22.08.2007
(73) Patentinhaber: Dr. Ing. h.c. F. Porsche Aktiengesellschaft, 70435 Stuttgart (DE)
(72) Erfinder: Germano, Francesco, 74321 Bietigheim-Bissingen (DE); Schulz, Achim, 75223 Niefern-Oeschelbronn (DE)

(56) Entgegenhaltungen:
- DE-A1- 4 231 641
- GB-A- 2 238 990
- JP-A- 59 102 608
- JP-A- 60 136 636
- JP-A- 60 192 138
- JP-A- 2003 205 722
- US-A- 2 592 391
- US-A- 2 892 636
- US-A- 3 150 867
- US-A- 6 053 488

## Beschreibung

Die Erfindung betrifft ein einstellbares Federbein für Kraftfahrzeuge gemäß dem Oberbegriff des Anspruchs 1. Ein derartiges einstellbares Federbein für Kraftfahrzeuge ist aus der US-A-3 150 867 bekannt.

Bei der Auslegung eines Fahrwerkes eines Kraftfahrzeuges müssen generell zwei einander an sich widerstrebende Gesichtspunkte miteinander in Einklang gebracht werden. Zum einen sollen die Fahrzeuginsassen möglichst komfortabel reisen, was ein "weiches" Fahrwerk erfordert, das möglichst alle großen und kleinen Fahrbahnunebenheiten "schluckt", zum anderen soll das Fahrzeug aus Gründen der Fahrsicherheit möglichst bei allen Beladungs- und Fahrzuständen und in allen Geschwindigkeitsbereichen sowie bei unterschiedlichsten Straßenverhältnissen, über die Fahrzeugräder stets einen zuverlässigen Kontakt mit der Fahrbahn halten.

Aus der DE 37 39 663 C2 ist ein einstellbares Federbein für Kraftfahrzeuge bekannt, welches durch wenigstens zwei hintereinander geschaltete, zu einem Federpaket zusammengefasste, Schraubenfedern mit einem dazwischen angeordneten Ringkörper gebildet ist, bei dem das Federpaket zwischen einem oberen und einem unteren Federteller axial vorgespannt ist und bei dem an mindestens einem Befestigungsabschnitt eine Anschlagsbuchse vorgesehen ist, die bei belastetem Federpaket an dem Ringkörper zur Anlage kommt.

Aus der DE 38 31 338 A1 ist ein aktives Federungssystem zur Schwingungsunterdrückung, insbesondere für Kraftfahrzeuge bekannt, welches eine für die Übertragung der statischen Fahrzeuglast bemessene erste Federvorrichtung und eine hierzu parallel geschaltete Kolben-Zylinder-Einheit aufweist. Dabei ist dieser Parallelschaltung eine zweite Federvorrichtung in Reihe geschaltet, welche so bemessen ist, dass sie bei maximaler statischer und dynamischer Last nicht "auf Block" geht. Dies soll höherfrequente Achsschwingungen vom Aufbau fernhalten.

Aus der DE 36 08 934 A1 ist ein Federungssystem für ein Kraftfahrzeug bekannt, welches eine Tragfeder sowie eine Korrekturfeder aufweist. Die Korrekturfeder ist durch mindestens eine vorgespannte Tellerfeder gebildet, die in Reihe zur Tragfeder geschaltet ist, während parallel hierzu eine mit einer Zusatzfeder versehene Niveauregulierungseinrichtung angeordnet ist.

Weiterhin ist aus der WO 97/30862 A1 ein Fahrzeug mit einem teleskopartigen Schwingungsdämpfer mit einem Dämpfungszylinder und einer in diesen eintauchenden Kolbenstange bekannt. Um dynamische und statische Abstandsänderungen zwischen Fahrzeugaufbau und Fahrbahn zu ermitteln, sind Sensoren für ein berührungsfrei arbeitendes Wegmesssystem vorgesehen, dem in dem Dämpfungszylinder und dem Hydraulikaggregat jeweils ringförmige Positionsgeber zugeordnet sind.

Die US 3,150,867 beschreibt eine Kombination aus Stoßdämpfer und Niveauregulierungsvorrichtung, wobei eine Feder vorgesehen ist, deren eine Federauflage mit einer Fahrzeugachse verbunden ist, und deren andere, einstellbare Federauflage beweglich mit dem Fahrzeugrahmen verbunden ist, wobei die Lage der einstellbaren Federauflage mittels Flüssigkeitsdruck eingestellt wird.

Die US 2,892,636 befasst sich mit einer zusätzlichen Federung für ein Kraftfahrzeug, wobei eine Hilfsfeder mittels zweier Hydraulikzylinder abgesenkt werden kann.

Ergänzend sei noch auf die DE 42 31 641 A1, die JP 60-192138, die JP 59-102608, die US 2 593,391 und die GB 2 238 990 A verwiesen, welche sich mit Aufhängungssystemen für Kraftfahrzeuge befassen.

Die vorliegende Erfindung beschäftigt sich mit dem Problem, für ein einstellbares Federbein der gattungsgemäßen Art eine verbesserte Ausführungsform anzugeben, welche einfacher aufgebaut ist und dadurch die Verwendung von Standardbauteilen erlaubt.

Dieses Problem wird erfindungsgemäß durch den Gegenstand des unabhängigen Anspruches gelöst. Vorteilhafte Ausführungsformen sind Gegenstand der abhängigen Ansprüche.

Die Erfindung beruht auf dem allgemeinen Gedanken, bei einem an sich bekannten, einstellbaren Federbein eine hydraulische Stellvorrichtung mit zumindest zwei Kolben-Zylinder-Aggregaten vorzusehen, welche durch eine Verstellung eine Tragfeder des elastischen Federbeines vorspannen bzw. entspannen und dadurch die Federeigenschaft des Federbeines verändern. Das einstellbare Federbein gemäß der Erfindung umfasst die als Schraubenfeder ausgebildete Tragfeder, die sich einenends an einem Ringkörper und anderenends an einem Federteller abstützt und eine herkömmliche Dämpfungseinrichtung in Form eines Kolben-Zylinder-Organs, welche zumindest teilweise innerhalb der Tragfeder verläuft. Ebenfalls zumindest teilweise innerhalb der Tragfeder verlaufend ist die hydraulische Stellvorrichtung mit ihren zumindest zwei Kolben-Zylinder-Aggregaten angeordnet, wobei die Kolben-Zylinder-Aggregate radial außerhalb der Dämpfungseinrichtung und radial innerhalb der Tragfeder positioniert sind. Die Stellvorrichtung stützt sich an ihrem einen Ende am Federteller und an ihrem anderen Ende über ein Stützlager am Fahrzeugchassis ab und ist zur axialen Positionierung des Federtellers relativ zu diesem Stützlager ausgebildet. Zur Verstellung des erfindungsgemäßen Federbeines dienen somit zwei relativ kleine Kolben-Zylinder-Aggregate, welche im Vergleich zu bisher verwendeten Ringkolbenanordnungen eine deutlich kleinere Dichtfläche aufweisen sowie geringere Arbeitsdrücke bei deutlich verringerten Wandstärken des jeweiligen Zylinders ermöglichen. Die beiden Kolben-Zylinder-Aggregate weisen aufgrund der geringeren Dichtflächen eine höhere Funktionssicherheit auf, welche Schwachpunkte darstellen können. Darüber hinaus ist es möglich, dass für die hydraulische Stellvorrichtung standardmäßige Kolben-Zylinder-Aggregate verwendet werden, welche einerseits kostengünstig sind und andererseits aufgrund langjährigem Einsatz eine hohe Betriebssicherheit gewährleisten. Des Weiteren führen die kleineren Wandstärken der Zylinder zu einer Gewichtsersparnis, was sich positiv auf die Energiebilanz des Kraftfahrzeuges auswirkt.

Gemäß einer vorteilhaften Ausführungsform der Erfindung ist der Federteller topfförmig ausgebildet und weist einen nach außen abstehenden Kragrand auf, wobei sich die Tragfeder an dem Kragrand abstützt und die hydraulische Stellvorrichtung von innen an einem Boden des topfförmigen Federtellers anliegt. Durch eine derartige Ausgestaltung des Federtellers wird eine Art der Zwangskopplung zwischen hydraulischer Stellvorrichtung und Federteller sowie zwischen Tragfeder und Kragrand des Federtellers geschaffen, wodurch ohne zusätzliche Verbindungsmittel, das heißt mit geringem Montageaufwand, eine zuverlässige Kopplung zwischen Tragfeder und Federteller sowie zwischen Federteller und hydraulischer Stellvorrichtung geschaffen werden kann.

Zweckmäßig weist das Federbein einen ovalen Querschnitt auf. Ein derartiger ovaler Querschnitt reduziert einen Bauraumbedarf des erfindungsgemäßen Federbeins. Sinnvollerweise weisen auch der Federteller bzw. die Tragfeder einen ovalen Querschnitt auf, wodurch mehr Bauraum für andere Bauelemente im Fahrwerksbereich des Kraftfahrzeuges zur Verfügung steht.

Bei einer weiteren vorteilhaften Ausführungsform sind die zumindest zwei Kolben-Zylinder-Aggregate der Stellvorrichtung über eine gemeinsame Zylindergehäuseanordnung miteinander verbunden. Eine derartige gemeinsame Zylindergehäuseanordnung unterstützt einen besonders exakten Stellvorgang der Stellvorrichtung, da eine relative Lageänderung der miteinander zwangsgekoppelten Zylindergehäuse zueinander ausgeschlossen werden kann. Durch die über die gemeinsame Zylindergehäuseanordnung erzwungene parallele Verstellmöglichkeit der beiden Kolben der hydraulischen Stellvorrichtung kann darüber hinaus ein gleichmäßiger Verstellvorgang erreicht werden, so dass ein Verkanten des Federtellers an einem Zylindergehäuse der Dämpfungseinrichtung vermieden werden kann, wodurch die Lebensdauer des erfindungsgemäßen Federbeins insgesamt verlängert werden kann.

Zweckmäßig ist eine zur Tragfeder in Reihe geschaltete Hilfsfeder vorgesehen, die eine deutlich geringere Federkonstante aufweist, als die Tragfeder. Der Hilfsfeder kommt die Aufgabe zu, auch bei vollständig eingefahrener Stellvorrichtung, das heißt, bei komplett entspannter Tragfeder, diese leicht vorzuspannen, so dass insbesondere Klappergeräusche durch eine sich von dem Ringkörper bzw. dem Federteller lösende Tragfeder unterbunden werden können. Die Hilfsfeder bewirkt somit, dass die Tragfeder auch in völlig entspanntem Zustand einenends an dem Federteller und anderenends an dem Ringkörper zuverlässig anliegt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch ein erfindungsgemäßes Federbein,
- Fig. 2: einen stark schematisierten Querschnitt durch das Federbein.

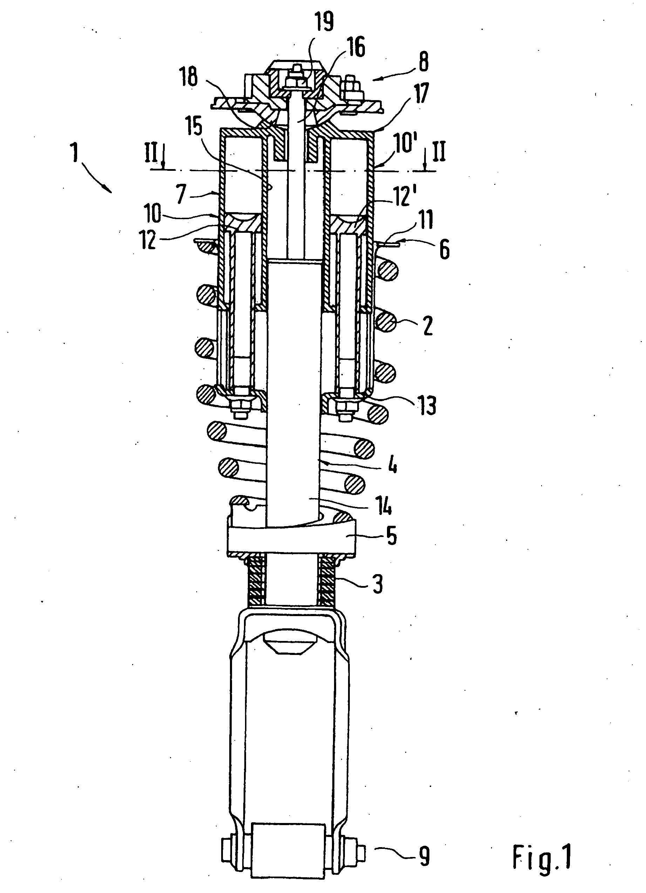

Entsprechend Fig. 1 weist ein erfindungsgemäßes einstellbares Federbein 1 eine Tragfeder 2, eine damit in Reihe geschaltete Hilfsfeder 3 sowie eine Dämpfungseinrichtung 4 in Form eines herkömmlichen Kolben-Zylinder-Organs auf. Die Tragfeder 2 sowie auch die Hilfsfeder 3 sind dabei vorzugsweise als Schraubenfedern ausgebildet, wobei sich die Tragfeder 2 einenends an einem Ringkörper 5 und anderenends an einem Federteller 6 abstützt. Wie der Fig. 1 zu entnehmen ist, verläuft die Dämpfungseinrichtung 4 zumindest teilweise innerhalb der Tragfeder 2 und zusätzlich innerhalb einer hydraulischen Stellvorrichtung 7. Die Dämpfungseinrichtung 4, die hydraulische Stellvorrichtung 7 sowie die Tragfeder 2 als auch die Hilfsfeder 3 verlaufen im wesentlichen koaxial zueinander. Generell stützt sich das Federbein 1 an seinem oberen Ende über ein Stützlager 8 an einem nicht gezeigten Fahrzeugchassis ab, während es an seinem unteren Ende über eine Anschlusseinrichtung 9 an einem nicht gezeigten radseitigen Fahrwerkselement angebunden ist.

Erfindungsgemäß weist die hydraulische Stellvorrichtung 7 zumindest zwei Kolben-Zylinder-Aggregate 10 und 10' auf, welche gemäß Fig. 1 radial außerhalb der Dämpfungseinrichtung 4 und radial innerhalb der Tragfeder 2 angeordnet sind. Die Stellvorrichtung 7 stützt sich dabei einerseits am Federteller 6 und andererseits am Stützlager 8 ab und dient zur vorbestimmten axialen Positionierung des Federtellers 6 relativ zum Stützlager 8. Ein Ausfahren der hydraulischen Stellvorrichtung 7 bzw. der beiden Kolben 12 und 12' der Kolben-Zylinder-Aggregate 10 und 10' bewirkt dabei gemäß Fig. 1 ein Verfahren des Federtellers 6 nach unten, wodurch die Tragfeder 2 von einem nach außen abstehenden Kragrand 11 des Federtellers 6 nach unten gedrückt und dadurch vorgespannt wird. Durch die Vorspannung der Tragfeder 2 wird ein Abstand zwischen dem Stützlager 8 und dem Federteller 6 vergrößert und gleichzeitig ein Einfederungswiderstand der Tragfeder 2 erhöht.

Gemäß Fig. 1 stützt sich dabei die Tragfeder 2 an dem Kragrand 11 des Federtellers 6 ab, während sich die beiden Kolben-Zylinder-Aggregate 10 und 10' mit ihren jeweiligen Kolben 12 und 12' von innen an einem Boden 13 des topfförmig ausgebildeten Federtellers 6 abstützen. Durch die Ausbildung des Federtellers 6 in der Art eines Topfes kann eine einfache Anbindung der Kolben 12, 12' einerseits und der Tragfeder 2 andererseits erreicht werden, wobei eine Außenwand des topfförmigen Federtellers 6 gleichfalls als Führung für die Tragfeder 2 dienen kann.

Die eingangs erwähnte und von der Tragfeder 2 durch den Ringkörper 5 getrennte Hilfsfeder 3, welche zur Tragfeder 2 gemäß Fig. 1 in Reihe geschaltet ist, weist eine deutlich geringere, beispielsweise höchstens halb so große, Federkonstante auf, als die Tragfeder 2 und dient lediglich dazu, dass bei vollständig eingefahrener Stellvorrichtung 7, das heißt bei vollständig entspannter Tragfeder 2, diese nicht lose am Ringkörper 5 bzw. am Kragrand 11 anliegt und dadurch Klappergeräusche erzeugt werden können. Bei vollständig entspannter Tragfeder 2 drückt somit die Hilfsfeder 3 den Ringkörper 5 gemäß Fig. 1 in Richtung der Tragfeder 2 und bewirkt dadurch eine gewisse vorgespannte Anlage der Tragfeder 2 einerseits am Kragrand 11 des Federtellers 6 und andererseits am Ringkörper 5.

Die Hilfsfeder 3 ist vorzugsweise so ausgelegt, dass sie normalerweise stets auf Block zusammengedrückt ist. Aus diesem Grund kann ein Federstahl der Hilfsfeder 3 vorzugsweise einen rechteckförmigen Querschnitt aufweisen, wodurch eine besonders enge, großflächige und stabile Anlage der einzelnen Federwindungen aneinander beim Zusammendrücken der Hilfsfeder 3 erreicht werden kann. Um die vorspannende Wirkung der Hilfsfeder 3 auf die Tragfeder 2 übertragen zu können, ist vorgesehen, dass der Ringkörper 5 auf einem Zylinder 14 der Dämpfungseinrichtung 4 axial verschiebbar gelagert ist.

Der Zylinder 14 der Dämpfungseinrichtung 4 seinerseits ist verschiebbar in der hydraulischen Stellvorrichtung 7 gelagert, wobei er von einer Innenmantelfläche 15 der hydraulischen Stellvorrichtung 7 geführt ist. Ein Kolben 16 der Dämpfungseinrichtung 4 ragt gemäß Fig. 1 durch die hydraulische Stellvorrichtung 7 hindurch und ist mit dem Stützlager 8 verbunden.

Wie aus Fig. 1 weiter ersichtlich, sind die beiden Kolben-Zylinder-Aggregate 10 und 10' der Stellvorrichtung 7 über eine gemeinsame Zylindergehäuseanordnung 17 miteinander verbunden. Diese gemeinsame Zylindergehäuseanordnung 17 bewirkt, dass die beiden Kolben 12 und 12' der beiden Kolben-Zylinder-Aggregate 10 und 10' parallel geführt werden und dadurch ein Verkanten des Zylinders 14 der Dämpfungseinrichtung 4 an der Innenmantelfläche 15 der hydraulischen Stellvorrichtung 7 vermieden werden kann. Durch die gemeinsame Zylindergehäuseanordnung 17 kann somit eine besonders exakte Stellbewegung erreicht werden, wodurch einerseits die Lebensdauer des erfindungsgemäßen Federbeines verlängert und andererseits die Funktionssicherheit erhöht werden können.

Um eine gewisse gelenkige Lagerung des erfindungsgemäßen Federbeins 1 am Stützlager 8 gewährleisten zu können, weist das Federbein 1 im Bereich seines Stützlagers 8 eine Gleitkalotte 18 in Form eines Kugelgelenkes auf, wobei an der Zylindergehäuseanordnung 17 eine Pfanne ausgebildet ist, während am Stützlager 8 ein dazu komplementär ausgebildeter Kugelkopf angeformt ist. Der Kolben 16 der Dämpfungseinrichtung 4 ist durch die Gleitkalotte 18 hindurchgeführt und mit einem elastischen Widerlagerelement 19 des Stützlagers 8 verbunden, insbesondere verschraubt.

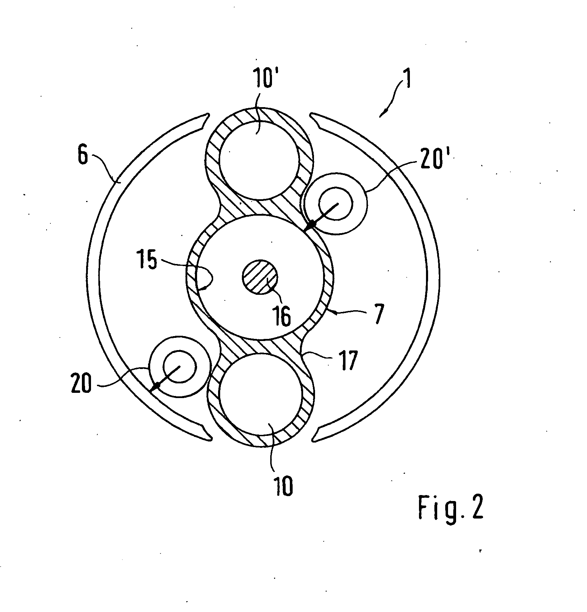

Des Weiteren ist eine nicht gezeigte Steuerungseinrichtung zur Steuerung der axialen Position des Federtellers 6 vorgesehen, welche vorzugsweise so ausgebildet ist, dass sie mehrere Federbeine 1 ansteuern kann und dadurch einen Nick/Wank-/Rollausgleich des Kraftfahrzeuges ermöglicht. Zur Ermittlung einer axialen Position des Federtellers 6 weist die Steuerungseinrichtung zumindest zwei Sensoren 20, 20' auf (vergleiche Fig. 2), wobei der erste Sensor 20 eine Verstellung zwischen dem Federteller 6 und der Zylindergehäuseanordnung 17 detektiert, während der zweite Sensor 20' eine Verstellung zwischen einem Zylindergehäuse der hydraulischen Stellvorrichtung 7 und dem relativ dazu verstellbaren Zylinder 14 der Dämpfungseinrichtung 4 detektiert. Durch die beiden Sensoren 20, 20' ist somit jederzeit eine exakte Positionsbestimmung der einzelnen Komponenten möglich. Vorzugsweise tastet dabei der zweite Sensor 20' durch eine nicht näher gezeigte Aussparung im Zylindermantel der hydraulischen Stellvorrichtung 7 die Bewegung des Zylinders 14 der Dämpfungseinrichtung 4 ab. Hierbei ist denkbar, dass zumindest ein, vorzugsweise beide Sensoren 20, 20', berührungsfrei arbeiten und baugleich ausgeführt sind, wodurch die Teilevielfalt reduziert werden kann.

Des Weiteren ist denkbar, dass das Federbein 1 einen ovalen Querschnitt aufweist, was voraussetzt, dass auch der Federteller 6 und zumindest die Tragfeder 2 einen ovalen Querschnitt aufweisen. Ein derartiger ovaler Querschnitt verringert den für das Federbein 1 erforderlichen Bauraum und führt zu einer kompakteren Bauweise.

In Fig. 2 ist ein Querschnitt durch das erfindungsgemäße Federbein 1 dargestellt, wobei die hydraulische Stellvorrichtung 7 gemäß der Fig. 2 zwei sich diametral gegenüberliegende Kolben-Zylinder-Aggregate 10 und 10' aufweist. Die Zylindergehäuseanordnung 17 umfasst dabei beide Kolben-Zylinder-Aggregate 10 und 10' und bildet gleichzeitig die Führung in Form einer Innenmantelfläche 15 für den darin geführten Zylinder 14 der Dämpfungseinrichtung 4. Eine nahezu kreisförmige Außenkontur weist hier gemäß Fig. 2 der Federteller 6 auf, welcher im Bereich der beiden Kolben-Zylinder-Aggregate 10 und 10' umfangsmäßig ausgespart ist. Eine derartige Aussparung bewirkt wiederum eine Reduzierung des für das erfindungsgemäße Federbein 1 erforderlichen Baumraumbedarfs. Denkbar ist hierbei, dass der Federteller 6 keinen kreisförmigen Querschnitt, wie in Fig. 2 gezeigt, sondern wie oben erwähnt einen ovalen Querschnitt aufweist, wodurch eine noch kompaktere Bauweise und ein reduzierter Bauraumbedarf erreicht werden können.

## Patentansprüche

1. Einstellbares Federbein (1) für Kraftfahrzeuge, umfassend
- zumindest eine als Schraubenfeder ausgebildete Tragfeder (2), die sich einenends an einem Ringkörper (5) abstützt,
- zumindest eine Dämpfungseinrichtung (4) mit einem Kolben-Zylinderaggregat, welche
- zumindest teilweise innerhalb der Tragfeder (2) verläuft,
- wobei sich das Federbein (1) einerseits über ein Stützlager (8) an einem Fahrzeugchassis und andererseits an einem Fahrwerkselement abstützt,
- wobei sich die Tragfeder (2) anderenends an einem Federteller (6) abstützt,
- wobei eine zumindest teilweise innerhalb der Tragfeder (2) verlaufende, hydraulische Stellvorrichtung (7) vorgesehen ist,
- wobei sich die Stellvorrichtung (7) einerseits am Federteller (6) und andererseits am Stützlager (8) abstützt und zur axialen Positionierung des Federtellers (6) relativ zum Stützlager (8) ausgebildet ist, **dadurch gekennzeichnet,**
- **dass** die hydraulische Stellvorrichtung (7) zumindest zwei Kolben-Zylinderaggregate (10, 10') aufweist, die radial außerhalb der Dämpfungseinrichtung (4) und radial innerhalb der Tragfeder (2) angeordnet sind,
- und **dass** die Kolben-Zylinderaggregate (10, 10') der Stellvorrichtung (7) über eine gemeinsame Zylindergehäuseanordnung (17) miteinander verbunden sind, welche gleichzeitig die Führung in Form einer Innenmantelfiäche (15) für den darin geführten Zylinder (14) der Dämpfungseinrichtung (4) bildet.

2. Federbein nach Anspruch 1, **dadurch gekennzeichnet,**
- **dass** der Federteller (6) topfförmig ausgebildet ist und einen nach außen abstehenden Kragrand (11) aufweist, und/oder
- **dass** sich die Tragfeder (2) an dem Kragrand (11) abstützt und dass sich die hydraulische Stellvorrichtung (7) von innen an einem Boden (13) des topfförmigen Federtellers (6) abstützt.

3. Federbein nach Anspruch 1 oder 2, **dadurch gekennzeichnet,**
- **dass** eine Steuerungseinrichtung zur Steuerung der axialen Position des Federtellers (6) vorgesehen ist, und/oder
- **dass** die Steuerungseinrichtung zumindest zwei Sensoren (20, 20') aufweist, und/oder
- **dass** ein erster Sensor (20) eine Verstellung zwischen einem Zylindergehäuse der Stellvorrichtung (7) und dem Federteller (6) detektiert, während ein zweiter Sensor (20') eine Verstellung zwischen dem Zylindergehäuse der Stellvorrichtung (7) und einem relativ dazu verstellbaren Teil (14) der Dämpfungseinrichtung (4) detektiert.

4. Federbein nach Anspruch 3, **dadurch gekennzeichnet,**
- **dass** zumindest ein Sensor (20, 20') berührungsfrei arbeitet und/oder
- **dass** die Sensoren (20, 20') baugleich sind.

5. Federbein nach einem der Ansprüche 1 bis 4, **dadurch gekennzeichnet,**
- **dass** das Federbein (1) einen ovalen Querschnitt aufweist, und/oder
- **dass** der Federteller (6) und zumindest die Tragfeder (2) einen ovalen Querschnitt aufweisen.

6. Federbein nach einem der Ansprüche 1 bis 5, **dadurch gekennzeichnet,**
- **dass** eine mit der Tragfeder in Reihe geschaltete Hilfsfeder (3) vorgesehen ist,
- **dass** die Hilfsfeder (3) eine geringere Federkonstante aufweist wie die Tragfeder (2), und/oder
- **dass** ein Federstahl der Hilfsfeder (3) einen rechteckförmigen Querschnitt aufweist.

7. Federbein nach einem der Ansprüche 1 bis 6, **dadurch gekennzeichnet, dass** der Ringkörper (5) auf dem Zylinder (14) der Dämpfungseinrichtung (4) axial verschiebbar ist.

8. Federbein nach einem der Ansprüche 3 bis 7, **dadurch gekennzeichnet, dass** die Steuerungseinrichtung so ausgebildet ist, dass sie mehrere Federbeine (1) ansteuern kann und **dadurch** einen Nick-/Wankausgleich des Kraftfahrzeugs ermöglicht.

9. Federbein nach einem der Ansprüche 1 bis 8, **dadurch gekennzeichnet, dass** das Federbein (1) im Bereich seines Stützlagers (8) eine Gleitkalotte (18) aufweist, welche in Form eines Kugelgelenks ausgebildet ist, über das das Federbein (1) in montiertem Zustand gelenkig am Aufbau abgestützt ist.

## Claims

1. Adjustable suspension strut (1) for motor vehicles, comprising
- at least one supporting spring (2) which is designed as a helical spring and is supported at one end on an annular body (5),
- at least one damping device (4) with a piston-cylinder unit, at least part of the damping device running within the supporting spring (2),
- wherein the suspension strut (1) is supported at one end on the vehicle chassis via a supporting bearing (8) and at the other end on a running-gear element,
- wherein the supporting spring (2) is supported at the other end on a spring plate (6),
- wherein a hydraulic adjusting device (7), at least part of which runs within the supporting spring (2), is provided,
- wherein the adjusting device (7) is supported at one end on the spring plate (6) and at the other end on the supporting bearing (8) and is designed for axially positioning the spring plate (6) relative to the supporting bearing (8), **characterized**
- **in that** the hydraulic adjusting device (7) has at least two piston-cylinder units (10, 10') which are arranged radially outside the damping device (4) and radially within the supporting spring (2),
- and **in that** the piston-cylinder units (10, 10') of the adjusting device (7) are connected to each other via a common cylinder housing arrangement (17) which at the same time forms the guide in the form of an inner circumferential surface (15) for the cylinder (14), which is guided therein, of the damping device (4).

2. Suspension strut according to Claim 1, **characterized**
- **in that** the spring plate (6) is of cup-shaped design and has an outwardly projecting protruding edge (11), and/or
- **in that** the supporting spring (2) is supported on the protruding edge (11), and in that the hydraulic adjusting device (7) is supported from the inside on a base (13) up the cup-shaped spring plate (6).

3. Suspension strut according to Claim 1 or 2, **characterized**
- **in that** a control device is provided for controlling the axial position of the spring plate (6), and/or
- **in that** the control device has at least two sensors (20, 20'), and/or
- **in that** a first sensor (20) detects an adjustment between a cylinder housing of the adjusting device (7) and the spring plate (6) while a second sensor (20') detects an adjustment between the cylinder housing of the adjusting device (7) and a part (14), which is adjustable relative thereto, of the damping device (4).

4. Suspension strut according to Claim 3, **characterized**
- **in that** at least one sensor (20, 20') operates in a contactless manner, and/or
- **in that** the sensors (20, 20') are structurally identical.

5. Suspension strut according to one of Claims 1 to 4, **characterized**
- **in that** the suspension strut (1) has an oval cross section, and/or
- **in that** the spring plate (6) and at least the supporting spring (2) have an oval cross section.

6. Suspension strut according to one of Claims 1 to 5, **characterized**
- **in tha**t an auxiliary spring (3) which is connected in series with the supporting spring is provided,
- **in that** the auxiliary spring (3) has a smaller spring constant than the supporting spring (2), and/or
- **in that** the spring steel of the auxiliary spring (3) has a rectangular cross section.

7. Suspension strut according to one of Claims 1 to 6, **characterized in that** the annular body (5) is axially displaceable on the cylinder (14) of the damping device (4).

8. Suspension strut according to one of Claims 3 to 7, **characterized in that** the control device is designed in such a manner that it can activate a plurality of suspension struts (1) and enables pitching/rolling of the motor vehicle to be compensated for.

9. Suspension strut according to one of Claims 1 to 8, **characterized in that** the suspension strut (1) has, in the region of the supporting bearing (8) thereof, a sliding spherical cap (18) which is designed in the form of a ball-and-socket joint via which the suspension strut (1) is supported in the fitted state in an articulated manner on the vehicle body.

## Revendications

1. Jambe de suspension réglable (1) pour véhicules automobiles, comprenant :
- au moins un ressort porteur (2) réalisé sous forme de ressort à boudin, qui s'appuie à une extrémité contre un corps annulaire (5),
- au moins un dispositif d'amortissement (4) avec une unité cylindre-piston qui
- s'étend au moins en partie à l'intérieur du ressort porteur (2),
- la jambe de suspension (1) s'appuyant d'une part par le biais d'un palier de support (8) contre un châssis du véhicule et d'autre part contre un élément du train de roulement,
- le ressort porteur (2) s'appuyant à l'autre extrémité contre une coupelle de ressort (6),
- un dispositif de réglage hydraulique (7), s'étendant au moins en partie à l'intérieur du ressort porteur (2), étant prévu,
- le dispositif de réglage (7) s'appuyant d'une part contre la coupelle de ressort (6) et d'autre part contre le palier de support (8) et étant réalisé en vue du positionnement axial de la coupelle de ressort (6) par rapport au palier de support (8),
**caractérisée en ce**
- **que** le dispositif de réglage hydraulique (7) présente au moins deux unités cylindre-piston (10, 10') qui sont disposées radialement en dehors du dispositif d'amortissement (4) et radialement à l'intérieur du ressort porteur (2),
- et **que** les unités cylindre-piston (10, 10') du dispositif de réglage (7) sont connectées l'une à l'autre par le biais d'un agencement de carter de cylindre commun (17), qui forme simultanément le guidage en forme de surface d'enveloppe interne (15) pour le cylindre (14) du dispositif d'amortissement (4) guidé à l'intérieur.

2. Jambe de suspension selon la revendication 1, **caractérisée en ce**
- **que** la coupelle de ressort (6) est réalisée en forme de pot et présente un bord en porte-à-faux (11) saillant vers l'extérieur, et/ou
- **que** le ressort porteur (2) s'appuie sur le bord en porte-à-faux (11) et en ce que le dispositif de réglage hydraulique (7) s'appuie depuis l'intérieur contre un fond (13) de la coupelle de ressort (6) en forme de pot.

3. Jambe de suspension selon la revendication 1 ou 2, **caractérisée en ce**
- **qu'**un dispositif de commande pour la commande de la position axiale de la coupelle de ressort (6) est prévu, et/ou
- **que** le dispositif de commande présente au moins deux capteurs (20, 20'), et/ou
- **qu'**un premier capteur (20) détecte un déplacement entre un carter de cylindre du dispositif de réglage (7) et la coupelle de ressort (6), tandis qu'un deuxième capteur (20') détecte un déplacement entre le carter de cylindre du dispositif de réglage (7) et une partie (14) du dispositif d'amortissement (4) déplaçable par rapport à celui-ci.

4. Jambe de suspension selon la revendication 3, **caractérisée en ce**
- **qu**'au moins un capteur (20, 20') fonctionne sans contact et/ou
- que les capteurs (20, 20') sont de construction identique.

5. Jambe de suspension selon l'une quelconque des revendications 1 à 4, **caractérisée en ce**
- **que** la jambe de suspension (1) présente une section transversale ovale, et/ou
- **que** la coupelle de ressort (6) et au moins le ressort porteur (2) présentent une section transversale ovale.

6. Jambe de suspension selon l'une quelconque des revendications 1 à 5, **caractérisée en ce**
- **qu**'un ressort auxiliaire (3) monté en série avec le ressort porteur est prévu,
- que le ressort auxiliaire (3) présente une plus faible constante de ressort que le ressort porteur (2), et/ou
- qu'un acier à ressort du ressort auxiliaire (3) présente une section transversale rectangulaire.

7. Jambe de suspension selon l'une quelconque des revendications 1 à 6, **caractérisée en ce que** le corps annulaire (5) peut être déplacé axialement sur le cylindre (14) du dispositif d'amortissement (4).

8. Jambe de suspension selon l'une quelconque des revendications 3 à 7, **caractérisée en ce que** le dispositif de commande est réalisé de telle sorte qu'il puisse commander plusieurs jambes de suspension (1) et permette de ce fait une compensation du tangage et du roulis du véhicule.

9. Jambe de suspension selon l'une quelconque des revendications 1 à 8, **caractérisée en ce que** la jambe de suspension (1) présente, dans la région de son palier de support (8), une calotte de glissement (18) qui est réalisée sous forme de rotule par le biais de laquelle la jambe de suspension (1) est supportée sur la carrosserie de manière articulée dans l'état monté.
